# EUROPEAN PATENT APPLICATION

(11) **EP 4 733 197 A1**
(43) Date of publication of application: **29.04.2026**
(21) Application number: 25184785.1
(22) Date of filing: 24.06.2025
(51) Int. Cl.: B64D 33/04, F01N 1/14, F01N 13/08, F02K 1/46, F02K 1/82

(54) **A THERMAL TRACE REDUCER SYSTEM**

(30) Priority: 22.10.2024 TR 2024014398
(71) Applicant: Tusas- Turk Havacilik Ve Uzay Sanayii Anonim Sirketi, 06980 Ankara (TR)
(72) Inventor: SANCAR, EMRE, 06980 ANKARA (TR); DALDAL, ABDURRAHMAN BURAK, 06980 ANKARA (TR); BAYAT, AKAY, 06980 ANKARA (TR); CAKIROGLU, TAYLAN, 06980 ANKARA (TR); EZERTAS, AHMET ALPER, 06980 ANKARA (TR)
(74) Representative: Berkkam, Ayfer

(57) **Abstract**

This invention relates to a body (2) in an aircraft, at least one engine (3) located on the body (2), generating the power required for the flight of the aircraft, an waste air (H) generated in the engine (3) due to the operation of the engine (3), at least one exhaust (4) located on the engine (3) and transferring the waste air (H) generated in the engine (3) outside the body (2), cold air (C) from the atmosphere, passing over the body (2) and contacting the exhaust (4) surface, at least one apparatus (5) that surrounds the exhaust (4) so as to be opposite to the outer surface of the exhaust (4) for the passage of cold air (C) in contact with the surface of the exhaust (4) and creates a cold air (C) corridor between the exhaust (4) and the exhaust (4) so that the heat generated on the surface of the exhaust (4) as a result of the waste air (H) generated by the engine (3) is removed by cold air (C), at least one opening (6) on the exhaust (4), allowing cold air (C) to enter through the exhaust (4) so that the cold air (C) mixes with the waste air (H), a flap (7) located on the exhaust (4) extending from the edge of the opening (6), allowing cold air (C) to pass through the apparatus (5) into the exhaust (4), a first position (I) in which the flap (7) is positioned to cover the opening (6), thereby preventing the passage of fluid.

## Description

This invention relates to a thermal trace reducer system that provides low infrared trace appearance with low exhaust gas temperature in aircraft.

The design of the ejector, which is part of the exhaust system for civil and military helicopters, varies according to the requirements. The main purpose of this structure is to discharge the combustion gases from the engine together with the cooling air drawn from the engine area. Factors such as the length, shape and diameter of the ejector affect both the mixing performance of hot combustion gases and cooling air and the back pressure value at the engine turbine outlet, which affects the power performance of the engine. Some exhaust systems use a secondary ejector to cool the ejector surface, passing cooling air over the outer surface of the first ejector. In addition, the temperature of the flow leaving the ejector has an equal effect on the visibility of military helicopters to threats. The more the hot and cold flow mixes in the ejector and the lower the average flow temperature, the lower the visibility of the helicopter to threats. In designs that provide secondary cooling air into the primary ejector, the flow inside the primary ejector has a backflow effect to the outside of the primary ejector. As a result of rotating the ejector in a direction above a certain amount, the primary and secondary cooling air mix and the hot exhaust gas in the inner part passes to the outer part and causes the surfaces to heat up. In this case, the infrared signature of the aircraft becomes visible from the outside.

The United States patent US10934937B2, which is included in the state of the art, discloses a cooling system comprising at least one movable member configured to close an opening formed in the outer skin of an airplane. An actuator moves the at least one movable member between a fully open position in which atmospheric air can be directed through the opening into an interior passage enclosed by the outer skin of the aircraft, and a fully closed position in which the opening is closed. The cooling system for the aircraft comprises one or more moving parts configured to cover one or more respective openings formed in the outer skin of the aircraft. An actuator moves the movable members between a fully open position, in which external atmospheric air can be directed through the openings to an interior passage surrounded by the outer skin of the aircraft and the airframe.

A thermal trace reducer system developed with this invention allows the cooling air passing between the exhaust and the apparatus to enter the exhaust by means of a structure with a flap and a guiding scoop, thereby reducing the average flow temperature.

Another aim of the invention is to integrate the low-temperature waste air from the exhaust gas into the military helicopter with a reduced infrared trace appearance.

Another aim of the invention is to provide an ejector system with a low trace drop by preventing the waste air from passing out of the exhaust and mixing with cold air by the ejector system making a curving movement.

The thermal trace reducer system defined in the first claim and the claims dependent on this claim, which are realized to achieve the purpose of the invention, comprises a body which is an aircraft, helicopter-like aircraft. The air vehicle on the fuselage includes at least one engine providing the necessary propulsion power for flight. It includes at least one exhaust located on the engine in connection with the engine, which allows the exhaust of the waste air generated due to the operation of the engine and which must be released outside. It includes an apparatus that surrounds the exhaust in such a way that a cold air directed from the atmosphere to the body enters the body in order to reduce the temperature formed on the surface of the exhaust as a result of the waste air and to form a cold air corridor between it and the exhaust. There is an opening that allows the cold air to mix with the waste air in the exhaust. Through the opening, the cold air between the apparatus and the exhaust is mixed with the high-temperature waste air from the engine, and the waste air is discharged from the body at a lower temperature, reducing the thermal drop of the aircraft. The cold air coming from the atmosphere contacts the surface of the exhaust, which is heated due to the waste air in the exhaust at the engine outlet, and cools it. There is an apparatus to be positioned around the outer surface of the exhaust to reduce the temperature formed on the entire surface of the exhaust by surrounding the cold air exhaust.

The apparatus provides cooling of the heated surface on the exhaust surface by wrapping the cold air almost completely around the outer surface of the exhaust. There is a flap extending so as to be supported on one edge of the opening. The flap is located above the opening so that it is positioned on the inner surface of the exhaust. Through the flap, cold air and waste air are mixed through the opening. The flap has a first position (I) covering the opening to prevent the mixing of cold air and waste air. When the flap is in the first position (I), the waste air in the exhaust is prevented from coming out of the opening to the outer surface of the exhaust and mixing with the cold air.

The inventive thermal trace reducer system is arranged in a second position (II) in which the flap is opened towards the inner surface of the exhaust, allowing cold air to pass through the opening. The system comprises at least one baffle, positioned on the outer surface of the exhaust, which directs the cold air towards the flap in the first position (I) so that the flap is stretched from the first position (I) to the second position (II) in order to reduce the temperature of the waste air by mixing the cold air with the waste air, and which allows the flap to be moved from the first position (I) to the second position (II) by the flow force of the cold air. The diverter extends from the exhaust towards the apparatus so as to partially obstruct the flow of cold air and directs the flow direction of the cold air towards the opening. The flow force of the cold air is used to move the flap from the first position (I) to the second position (II). By moving the flap to the second position (II), the cold air enters the exhaust. Exhaust and apparatus act as ejectors in air vehicles.

In one embodiment of the invention, the thermal trace reducer system comprises a flap positioned on the inner wall of the exhaust in contact with exhaust waste air, extending into the exhaust from the edge forming the opening on the exhaust. The flap is opened from the first position (I) to the second position (II) by the flow force of cold air into the exhaust.

In one embodiment of the invention, the thermal trace reducer system comprises a guide, one end of which is located on the other edge of the opening opposite the flap on the exhaust, the other end of which is at an acute angle extending from the exhaust towards the apparatus, and which directs the cold air to the cover by changing the flow direction of the cold air by means of the inclined surface in order to bring the flap from the first position (I) to the second position (II) by the flow force of the cold air.

In one embodiment of the invention, the thermal trace reducer system comprises a one-way opening flap positioned on the inner wall of the exhaust so as to substantially completely cover the opening so as to prevent waste air from passing through the opening in the first position (I) and to be opened by a cold air flow.

In one embodiment of the invention, the thermal trace reducer system comprises a flap in the second position (II) positioned opposite the diverter, such that cold air flows between it and the diverter. The flap in the second position (II) is in the open position, allowing the cold air flow to be directed into the exhaust. The cold air flows into the exhaust by sweeping the surfaces facing each other with the flap positioned opposite to the deflector.

In one embodiment of the invention, the thermal trace reducer system comprises a spring positioned at the location where the flap is supported on the exhaust, which allows the flap to be moved from the second position (II) to the first position (I) in the event that the cold air flow is not sufficient to move the flap from the first position (I) to the second position (II).

In one embodiment of the invention, the thermal trace reducer system comprises a baffle having a curved surface to form a notch in the protrusion structure, thereby changing the direction of flow of cold air.

The thermal trace reducer system realized to achieve the object of the present invention is shown in the accompanying figures;

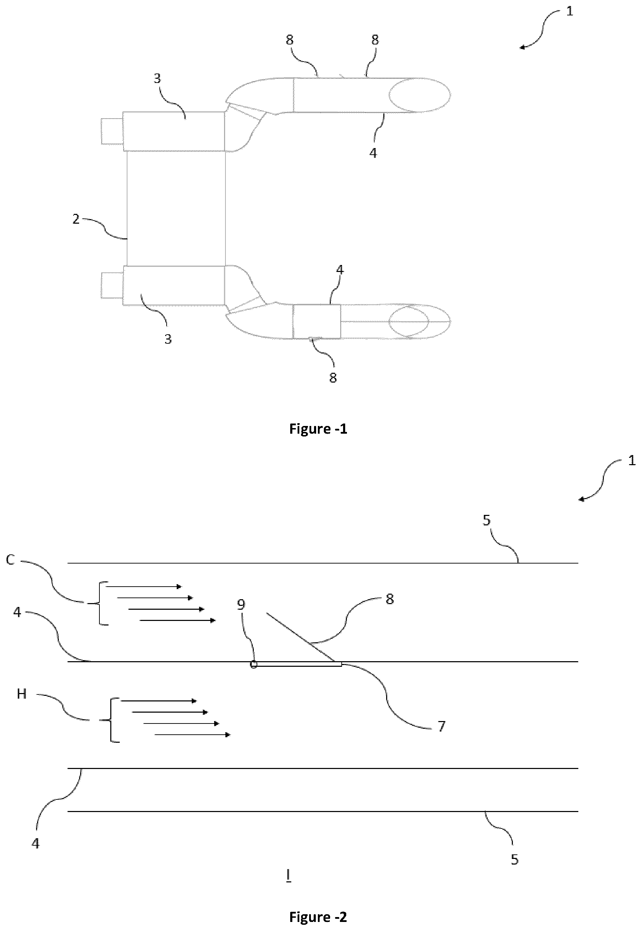

Figure 1 - Top view of the thermal track reducer system.
Figure 2 - View of the thermal track reducer system in the first position (I).

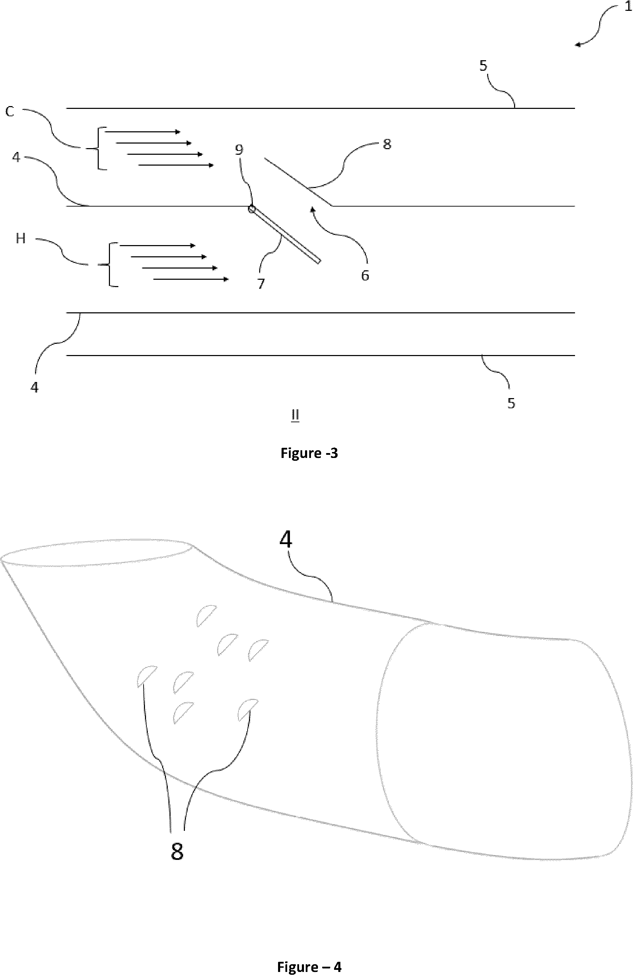

Figure 3 - View of the thermal trace reducer system in the second position (II).
Figure 4 - Side view of the exhaust.
Figure 5 - Perspective view of the exhaust
Figure 6 - Side view of the exhaust and apparatus.

The parts in the figures are numbered one by one and the corresponding numbers are given below.
1. Thermal Trace Reducer System
2. Body
3. Engine
4. Exhaust
5. Apparatus
6. Opening
7. Flap
8. Deflector
9. Spring
C. Cold air
H. Waste Air
I. First position
II. Second position

A thermal trace reducer system (1), a body (2) in the aircraft, at least one engine (3) on the body (2) generating the power required for the flight of the aircraft, an waste air (H) generated in the engine (3) due to the operation of the engine (3), at least one exhaust (4) located on the engine (3) and transferring the waste air (H) generated in the engine (3) outside the body (2), a cold air (C) coming from the atmosphere, passing over the body (2) and contacting the surface of the exhaust (4), at least one apparatus (5), located on the exhaust (4), which surrounds the exhaust (4) so as to be opposite to the outer surface of the exhaust (4) for the passage of cold air (C) in contact with the surface of the exhaust (4) and which creates a corridor of cold air (C) between the exhaust (4) and the exhaust (4) so that the heat generated on the surface of the exhaust (4) as a result of the waste air (H) generated by the engine (3) is removed by cold air (C), at least one opening (6) allowing cold air (C) to enter the exhaust (4) so that the cold air (C) mixes with the waste air (H), a flap (7) located on the exhaust (4) extending from the edge of the opening (6) so as to allow the cold air (C) to pass from the apparatus (5) into the exhaust (4), a first position (I) in which the flap (7) is positioned so as to cover the opening (6) and prevent the passage of fluid. (Figure -1)

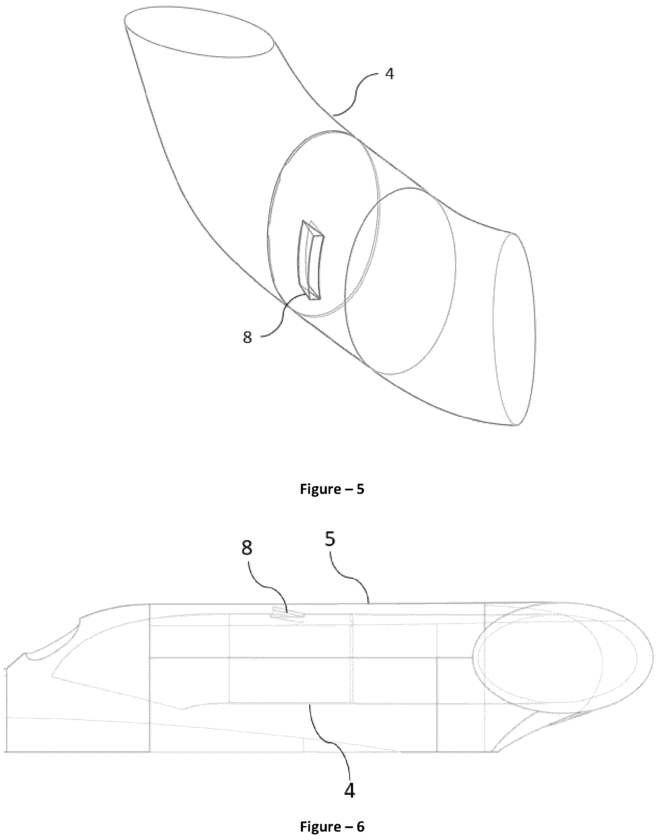

The inventive thermal trace reducer system (1) comprises a second position (II) in which the flap (7) is opened to allow cold air (C) to pass into the exhaust (4), the flap (7) being moved from the first position (I) to the second position (II) as a result of the cold air (C) hitting the flap (7) to mix the cold air (C) with the waste air (H), the flap (7) being located on the outer surface of the exhaust (4), at least one deflector (8) extending from the surface of the exhaust (4) opposite the apparatus (5) towards the apparatus (5) so that the cold air (C) passes into the exhaust (4) and mixes with the waste air (H) to reduce the temperature of the waste air (H) in order to move the flap (7) from the first position (I) to the second position (II) by directing the cold air (C) into the opening (6). (Figure -2 and figure 6)

An engine (3) is located on a body (2), which is an aircraft, and generates the power required for taxiing or flight of the aircraft. Due to the operating principle of the engine (3), high temperature waste air (H) is generated as a result of the reaction of the fuel being processed. There is an exhaust (4) in a form predetermined by the manufacturer that allows the waste air (H) to meet the atmosphere. The waste air (H), which is the heated fluid discharged through the exhaust (4), causes the formation of a hot air mass in and around the exhaust (4) of the aircraft. In order to reduce the temperature on the surface of the exhaust (4), there is a cold air (C) that hits the surface of the exhaust (4) from the atmosphere. By means of the cold air (C), the surface of the exhaust (4) is cooled and thermal attenuation is achieved. There is an apparatus (5) which allows the cold air (C) to envelop the exhaust (4) and cool its surface, encircling the outer surface of the exhaust (4) and forming an air corridor with cold air (C) between it and the exhaust (4). There is an opening (6) located above the exhaust (4) which allows the cold air (C) passing through the corridor formed between the exhaust (4) and the apparatus (5) to pass into the exhaust (4). The cold air (C) passing through the opening (6) into the exhaust (4) mixes with the high temperature waste air (H) and reduces the temperature of the gas sent from the exhaust (4) to the atmosphere. On the surface where the opening (6) is located, there is a flap (7) located on the edge forming the opening (6). The flap (7) has a first position (I) in which it prevents the passage of the flow so as to cover the opening (6). The flap (7) is positioned in the first position (I) over the opening (6) so as to prevent the mixing of cold air (C) and waste air (H). The flap (7) in the first position (I) almost completely closes the opening (6), preventing the flow from passing through. (Figure -3)

There is a second position (II) in which the flap (7) allows the passage of cold air (C). The flap (7) is positioned almost fully open in the second position (II). This allows air flow to take place. In order for the cold air (C) between the exhaust (4) and the apparatus (5) to pass through the opening (6) and enter the inner region of the exhaust (4), there is at least one deflector (8) located on the knee surface of the exhaust (4), which directs the flow direction of the cold air (C) onto the flap (7), which provides the flow power to allow the flap (7) to pass from the first position (I) to the second position (II). The deflector (8) has a porous structure extending towards the apparatus (5) on the outer surface of the exhaust (4). The deflector (8) is positioned on one side of the opening (6) and blocks the cold air (C). The deflector (8), which changes the flow direction of the cold air (C), directs the cold air (C) to the area where the opening (6) is located and hits the surface of the flap (7) located in the first position (I). As a result of the cold air hitting the surface of the flap (7), the cover moves from the first position (I) to the second position (II). When the flap (7) moves to the second position (II), cold air (C) enters the exhaust (4) through the opening (6). The cold air (C) mixes with the high temperature waste air (H) in the exhaust (4) and the temperature of the waste air (H) is reduced. The air formed as a result of the mixture of cold air (C) and waste air (H) is discharged from the exhaust (4) to the outside of the body (2) at a lower temperature than the waste air (H). In this way, a low trace appearance is provided in thermal cameras with air at a lower temperature than the waste air (H) outside the body (2). (Figure -3)

In one embodiment of the invention, the thermal trace reducer system (1) comprises a flap (7) which is positioned on the inner surface of the exhaust (4) so as to extend from a corner of the exhaust (4) having a surface of the exhaust (4) to the inner surface of the exhaust (4) so as to form the opening (6) of the exhaust (4), and which is opened from the first position (I) to the second position (II) in the direction in which cold air (C) flows so as to be directed towards the inner surface of the exhaust (4), thereby allowing cold air (C) to enter the exhaust (4). The flap (7) is positioned in the first position (I) so as to almost completely cover the opening (6) and prevent waste air (H) from passing through the opening (6). This allows cold air (C) to enter the exhaust (4) without disturbing its flow (Figure -3).

In one embodiment of the invention, the thermal trace reducer system (1) comprises a deflector (8) in concave form, positioned on the exhaust (4) opposite to the flap (7), extending in a direction opposite to the direction of the air flow towards the apparatus (5), thereby directing the cold air (C) onto the flap (7) and bringing the flap (7) from the first position (I) to the second position (II). The deflector (8) acts as a scoop in the form of a protrusion on the exhaust (4). In this way, the deflector (8) on the outer surface of the exhaust (4) extends to the surface of the apparatus (5) at an acute angle to meet the cold air (C) and directs the flow direction of the cold air (C) between the apparatus (5) and the exhaust (4) to the flap (7), allowing more cold air (C) to enter the exhaust (4). (Figure -5)

In one embodiment of the invention, the thermal trace reducer system (1) comprises a flap (7) which is form-fit with the opening (6) so as to cover the opening (6), and which is positioned on the inner wall of the exhaust (4) so as to allow the exhaust (4) to open in one direction to the inside of the exhaust (4), thereby preventing waste air (H) from escaping from the opening (6). In order to prevent backflow, the waste air (H) is prevented from passing through the opening (6), thus preventing the formation of thermal drop. With the one-way opening of the flap (7), the waste air (H) in the exhaust (4) is prevented from causing backflow and cold air (C) is directed into the exhaust (4). In this way, the wall of the flap (7) prevents the opening of the flap (7), which rests on the inner wall of the exhaust (4) in such a way that the wall of the flap (7) does not allow it to pass through the opening (6), with the force from the waste air (H) side, preventing the waste air (H) from exiting through the opening (6). (Figure -4)

In one embodiment of the invention, the thermal trace reducer system (1) comprises a flap (7) having a second position (II) in which the channel structure is formed parallel to the deflector (8). When the flap (7) is in the second position (II), the deflector (8) is almost completely opposite to the deflector (8) so that the cold air (C) passes into the exhaust (4) without disturbing the flow profile by forming a passage corridor on the opening (6). (Figure -3)

In one embodiment of the invention, the thermal trace reducer system (1) comprises at least one spring (9) which, when the flow of cold air (C) falls below a threshold value determined by the manufacturer, closes on the opening (6) by moving the flap (7) from the second position (II) to the first position (I), thereby preventing waste air (H) from passing through the opening (6) and out of the exhaust (4). The spring (9) prevents the waste air (H) from passing through the opening (C) by keeping the flap (7) in the first position (I). This prevents the passage of waste air (H) through the opening (6) when the cold air (C) is at low velocity. (Figure -2)

In one embodiment of the invention, the thermal trace reducer system (1) comprises a deflector (8) in the form of a protrusion having a concave and convex double curved structure to direct cold air (C) into the exhaust (4), thereby transmitting the flow of cold air (C) onto the flap (7). Thanks to the deflector (8), which has a notch-like mouth structure on the outer surface of the exhaust (4) and extends in the direction from which the cold air comes, the cold air (C) in the corridor between the apparatus (5) and the exhaust (4) acts as a diverter mouth that allows the cold air (C) to enter through the opening (6) and mixes with the waste air (H) to reduce its temperature. In this way, when the cold air (C) comes into contact with the surface of the deflector (8), it is ensured that it is directed onto the flap (7) without disturbing its flow. (Figure -5)

## Claims

1. A thermal trace reducer system (1), comprising a body (2) in the aircraft, at least one engine (3) on the body (2) generating the power required for the flight of the aircraft, an waste air (H) generated in the engine (3) due to the operation of the engine (3), at least one exhaust (4) located on the engine (3) and transferring the waste air (H) generated in the engine (3) outside the body (2), cold air (C) from the atmosphere, passing over the body (2) and contacting the exhaust (4) surface, at least one apparatus (5) that surrounds the exhaust (4) so as to be opposite to the outer surface of the exhaust (4) for the passage of cold air (C) in contact with the surface of the exhaust (4) and creates a cold air (C) corridor between the exhaust (4) and the exhaust (4) so that the heat generated on the surface of the exhaust (4) as a result of the waste air (H) generated by the engine (3) is removed by cold air (C), at least one opening (6) on the exhaust (4), allowing cold air (C) to enter through the exhaust (4) so that the cold air (C) mixes with the waste air (H), a flap (7) located on the exhaust (4) extending from the edge of the opening (6), allowing cold air (C) to pass through the apparatus (5) into the exhaust (4), a first position (I) wherein the flap (7) is positioned to cover the opening (6), preventing fluid passage, **characterised by** a second position (II) wherein the flap (7) is opened to allow cold air (C) to pass into the exhaust (4), the flap (7), which is moved from the first position (I) to the second position (II) as a result of the cold air (C) hitting the flap (7) to ensure the mixing of cold air (C) with waste air (H), at least one deflector (8) on the outer surface of the exhaust (4), extending from the surface of the exhaust (4) against the apparatus (5) towards the apparatus (5) to bring the flap (7) from the first position (I) to the second position (II) by directing cold air (C) into the opening (6) whereby cold air (C) passes into the exhaust (4) and mixes with the waste air (H) to reduce the temperature of the waste air (H).

2. A thermal trace reducer system (1) according to claim 1, **characterised by** the flap (7) positioned on an inner surface of the exhaust (4) so as to extend from a corner which is a surface of the exhaust (4) to the inner surface of the exhaust (4), where the exhaust (4) allows the opening (6) to form ; movable from the first position (I) to the second position (II) by opening in the direction in which the cold air (C) flows so as to be directed towards the inner surface of the exhaust (4), thereby allowing the cold air (C) to enter the exhaust (4).

3. A thermal trace reducer system (1) according to claim 1 or 2, **characterised by** the deflector (8) positioned on the exhaust (4) facing the flap (7), extending in the direction opposite to the direction of the air flow towards the apparatus (5), having a concave form, thereby directing cold air (C) onto the flap (7) and bringing the flap (7) from the first position (I) to the second position (II).

4. A thermal trace reducer system (1) according to any one of the preceding claims, **characterised by** the flap (7) having a form compatible with the opening (6) so as to cover the opening (6), positioned on the inner wall of the exhaust (4), allowing the exhaust (4) to open in one direction to the inside of the exhaust (4), preventing waste air (H) from escaping outside the opening (6).

5. A thermal trace reducer system (1) according to any one of the preceding claims, **characterized by** the flap (7) having a second position (II) forming a channel structure parallel to the deflector (8).

6. A thermal trace reducer system (1) according to any one of the preceding claims, **characterised by** at least one spring (9) closing on the opening (6) when the flap (7) moves from the second position (II) to the first position (I) and preventing waste air (H) from passing through the opening (6) and out of the exhaust (4) if the cold air (C) flow falls below a threshold value set by the manufacturer.

7. A thermal trace reducer system (1) as in any one of the preceding claims, **characterised by** the deflector (8) in the form of a protrusion with a concave and convex double curved structure to direct cold air (C) into the exhaust (4), which transmits the flow of cold air (C) onto the flap (7).
